# EUROPEAN PATENT APPLICATION

(11) **EP 3 974 746 A1**
(43) Date of publication of application: **30.03.2022**
(21) Application number: 20198801.1
(22) Date of filing: 28.09.2020
(51) Int. Cl.: F25B 25/00, F24D 11/02, F24D 19/10, F25B 30/06

(54) **A HEAT PUMP SYSTEM**

(71) Applicant: MD Energi ApS, 8541 Skødstrup (DK)
(72) Inventor: Ditlevsen, Michael, 8541 Skødstrup (DK)
(74) Representative: AWA Denmark A/S

(57) **Abstract**

A heat pump system for connection with an ultra-low district heating network, the heat pump system comprising: a piping network, a compressor configured to allow a refrigerant to flow in the piping network and perform a vapour compression refrigeration cycle, a first heat exchanger connected to the piping network and to the compressor, the first heat exchanger causing a heat-exchange between the refrigerant flowing in the piping network and water passing therethrough, a second heat exchanger connected to the piping network and to the compressor, the second heat exchanger causing a heat-exchange between the refrigerant flowing in the piping network and water passing therethrough, a sub-cooling heat exchanger configured to cool down the refrigerant flowing in the piping network, a super-heating heat exchanger configured to heat up the refrigerant flowing in the piping network, a buffer tank having an inlet at the lower part of the buffer tank and an outlet at the upper part of the buffer tank, a circulation line and a controller, the circulation line configured to allow a fluid to flow therein and the controller being configured to set a setpoint and perform a distribution control of the fluid based on the setpoint, a third heat exchanger connected to a supply network being configured to preheat the fluid, wherein when the fluid temperature of the circulation line is equal to the setpoint, the return of the fluid to the buffer tank through the inlet is hindered, and when the fluid temperature of the circulation line is below the setpoint, the fluid is returned to the buffer tank through the inlet, or vice versa.

## Description

### Technical Field

The present invention relates to a heat pump system for decentralised locations which is configured to be connected to ultra-low district heating.

### Introduction

The present invention relates to a heat pump system for connection with an ultra-low district heating network, the heat pump system comprising: a piping network, a compressor configured to allow a refrigerant to flow in the piping network and perform a vapour compression refrigeration cycle, a first heat exchanger connected to the piping network and to the compressor, the first heat exchanger causing a heat-exchange between the refrigerant flowing in the piping network and water passing therethrough, a second heat exchanger connected to the piping network and to the compressor, the second heat exchanger causing a heat-exchange between the refrigerant flowing in the piping network and water passing therethrough, a sub-cooling heat exchanger configured to cool down the refrigerant flowing in the piping network, a super-heating heat exchanger configured to heat up the refrigerant flowing in the piping network, a buffer tank having an inlet at the lower part of the buffer tank and an outlet at the upper part of the buffer tank, a circulation line and a controller, the circulation line configured to allow a fluid to flow therein and the controller being configured to set a setpoint and perform a distribution control of the fluid based on the setpoint, a third heat exchanger connected to a supply network being configured to preheat the fluid.

### Background Art

With the increasing demand for reducing CO2 emissions and increasing the intrusion of renewable energy into the energy system, flexible energy solutions are sought which are efficient in cold climates, as well. Electrification of district heating (DH) networks using heat pumps is a way to achieve a better environmental and economic performance compared to conventional energy systems. Examples of heat pump systems coupled with local DH networks include air-to-water, water- sourced or geothermal types installed in residential or office buildings. While these solutions have proven to function well over the recent years, rooms for improvement exist in terms of flexibility in the design of the components of the heat pump system and energy savings.

The efficiency of the DH systems can be increased significantly if they are operated with low supply and return temperatures. For that reason, ultra-low-temperature DH is becoming more relevant nowadays, but introduces more challenges to the afore-mentioned energy systems with regards to the efficiency of the heat pump and reducing the CO2 emissions.

Generally, a reduction of the DH temperature has several positive effects on the energy efficiency of the heat supply. When there is a decrease in the DH temperatures, the heat losses coming from the pipe networks are also lower. This may result in significant energy savings. For example, when supply and return temperatures are reduced from 80°C/40°C to 60°C/30°C, the heat losses are estimated to decrease by 30%. The decrease of heat losses may be even higher for greater temperature reductions. Furthermore, the efficiency of the heat production is increased for the heat pumps. Ultra low-temperature district heating relates to supply temperatures typically below 45°C and even down to 30°C for new buildings.

On the other hand, the temperature reductions in the DH networks are limited by the demands and technical requirements of the buildings.

### Summary of Invention

The objectives of the invention are therefore to provide a flexible and environmental-friendly water-to-water heat pump that can achieve high efficiency combined with ultra low-temperature district heating and that optimizes its operation according to external weather conditions, the user's preferences and/or the specific conditions of the building.

With this background, it is an object of the present invention to provide a heat pump system of the kind mentioned in the introduction, wherein when the fluid temperature of the circulation line is equal to the setpoint, the return of the fluid to the buffer tank through the inlet is hindered, and when the fluid temperature of the circulation line is below the setpoint, shunt valve adds hot water and the outgoing fluid from the circulation line is returned to the buffer tank through the inlet, or vice versa.

In a first aspect, this and further objects are achieved by the heat pump system provided that makes it possible for district heating systems to lower the supply temperature to 35°C. Moreover, the heat pump system is flexible meaning that the hot water temperature can be risen up to the current needs of each house having the heat pump installed. This allows for significant savings for district heating networks when the supply temperature is lowered while at the same time transmission losses are minimized. It also becomes possible to decrease the flow rate. The heat pump may also be used in remote or problematic areas where the district heating network cannot achieve satisfactory supply temperature levels.

In addition, a flexible and compact solution is thereby provided enabling simple installation and operation. Furthermore, the number of additional components needed to be installed to enable operation of the system is minimized. Therefore, cost savings may be achieved and errors mounting additional components to the system may be avoided.

The low temperatures of the district heating allow for a significant reduction in the CO2 emissions. The electricity consumption of the heat pump system may be covered by green energy, such as wind power, thus resulting in a completely sustainable and carbon neutral energy system.

Further details and advantages will emerge from the following description of embodiments.

In a presently preferred embodiment, the heat pump system may comprise a first and a second heat exchanger, a compressor, a superheating heat exchanger and a sub-cooling heat exchanger.

In a preferred embodiment, the heat pump uses a buffer tank, wherein the highest temperature requirements from the heating demand of the building or hot water use determine the temperature in the buffer tank. The buffer tank may preferably comprise water. The buffer tank may have a volume of 100-120 liter. The heating of the building is provided by a shunt circuit or circulation line, which may further comprise an outdoor temperature sensor or weather compensation sensor, wherein the flow temperature control is performed according to the outdoor temperature.

In an embodiment, the buffer tank may have an inlet at a lower part of the buffer tank and an outlet at an upper part of the buffer tank, or vice versa. The inlet and outlet of the buffer tank may be positioned at any other point on an outer surface of the buffer tank in proximity to each other or at a distance from each other.

In a preferred embodiment, if the heating demand is higher than the hot water demand, a 3-way mixing valve is installed to adjust the hot water temperature. If domestic hot water (DHW) demand is high, the shunt circuit for heating may be closed so that all heat from the buffer tank and heat pump is transferred to the hot water.

The heat pump can operate with supply temperature from the district heating network up to 35°C and deliver 75°C flow temperature without the use of supplementary heaters and still have a high COP. For example, the calculated COP of the compressor is equal to 4.94 for a condensing temperature of the compressor of 70°C (saturated discharge temperature), outlet water temperature of 65°C and DH supply temperature of 30°C. For the same DH supply temperature but for a condensing temperature of 60°C and outlet water temperature of 55°C, the calculated COP of the compressor is equal to 5.65.

This provides numerous possibilities for applications enabling the connection to future generation ultra-low DH networks, as well as more conventional ones. Furthermore, energy and CO2 savings may thus be achieved, without the efficiency of the system being compromised.

The heat pump system may further comprise a frequency controller and/or an inverter controller. The high efficiency of the heat pump is achieved by the superheater or super-heating heat exchanger mounted in series with the first heat exchanger. The first heat exchanger is connected to the DH network and thus may also be referred to as DH heat exchanger. The superheater may overheat the suction gas up to 50°C, which is usually the maximum allowable gas temperature returned to the suction side of the compressor. The subcooler or sub-cooling heat exchanger may be mounted in series with the superheater. The subcooler may cool down the liquid refrigerant to temperatures below 30°C. At the same time, as the subcooler cools down the liquid, it adds heat to the 25°C cold water, coming from the DH heat exchanger. For example, for supplying hot water to the house at 65°C, the subcooler supplies approx. 1.3°C to 25°C from the outlet of the first heat exchanger to the shunt circuit or circulation line from the district heating, resulting in heating savings of approx. 20%.

The superheater may prevent wet compression of the compressor and enable stable operation.

The compressor may have its operating capacity being varied. The compressor may preferably be of a semi hermetic reciprocating type. Other types of compressors may alternatively be selected that may handle higher temperatures.

Various types of sensors may be disposed in the heat pump system. For example, an evaporation temperature sensor detecting the temperature of the refrigerant, an outdoor temperature sensor, a hot water temperature sensor etc. may be included.

A muffler may be disposed between the second heat exchanger and the compressor to reduce the pulsation of the flow of the refrigerant. The muffler may comprise a muffler body and a filter. It may be fixed to a wall portion of the compressor.

The heat pump may make use of a variety of different refrigerants. In a presently preferred embodiment, the refrigerant R1234ZE is used with ODP of 0, and global warming potential GWP-AR4 of 7. R1234ZE is an HFO refrigerant categorized in ASHRAE group A2L (A: lower toxicity, 2L: lower or mild flammability). The advantages of this refrigerant compared to conventional refrigerants used in current heat pump systems are its efficiency and environmental friendliness.

On the primary side of the heat pump system, the second heat exchanger is comprised which is connected to the buffer tank. The primary side may be understood as the part from the second heat exchanger to the buffer tank, including the field installation and part of the heat pump installation. The primary side may comprise a circulation pump which may ensure that the heat pump can always supply full capacity to the buffer tank or to a hot water heat exchanger.

On the secondary side of the heat pump system, the heating shunt circuit is comprised, as well as a circulation pump for circulating DH water.

The main control of the heat pump is coupled with the outdoor temperature sensor. The control may use a weather compensation program. The controller may control a modulating actuator that may sit on the inlet of the shunt circuit for the housing. The controller controls the temperature in the buffer tank, depending on whether the house heating or the hot water has the highest set point.

The controller may use a microcomputer that includes a CPU, a memory and an input/output interface. The controller may be connected to the sensors that were described before and receive the detection signals of the sensors. The controller may also be connected to different types of valves to control their operation based on the received signals.

A domestic hot water (DHW) heat exchanger may be mounted in series with a one-way valve and the buffer tank. In an embodiment, a circulation pump may be mounted between the DHW heat exchanger-and a three-way valve. The three-way valve is a control valve to shut off water flow in one pipe while opening water flow in another pipe. The three-way valve may allow the water to bypass the DHW heat exchanger and flow back to the buffer tank, when the DHW temperature is too high (when the house heating demand is high). The desired DHW temperature will be thus achieved.

Alternatively, a three-way valve may be installed after the circulation pump which is mounted after the second heat exchanger. The three-way valve can open a connection line to DHW heat exchanger, or a connection line to the buffer tank.

A one-way valve may be mounted between the outlet from DHW heat exchanger and the buffer tank. A three-way bypass or mixing valve may be mounted before the inlet line to the DHW heat exchanger. The three-way bypass valve may allow the water to bypass the DHW heat exchanger and flow back in the return pipe to the buffer tank, when the DHW temperature is too high.

On the primary side, a third or preheating heat exchanger may be used to preheat the cold water. In an embodiment, the preheating heat exchanger may preheat the cold water from 10°C to 25°C using energy from DH.

In an embodiment, the control of the heat pump system may be a microprocessor control that gathers information from the various components and enables to change set points, adjust the weather compensation curve, stop / start the system and set sound alarms.

In an embodiment, the heat pump system may also comprise a safety circuit consisting of a flow switch, a compressor control and/or a pressure transmitter. The flow switch mounted in the shunt circuit on the district heating side may comprise a compressor thermal relay - thermal box, a low pressure switch, a high pressure switch and a safety thermostat. The compressor control is done by means of pressure transmitter mounted on the pressure side of the compressor. The pressure transmitter gives signal to frequency converter of desired compressor capacity.

In an embodiment, a three-way bypass valve may be mounted between the first heat exchanger, and the subcooler, to prevent too low refrigerant liquid temperatures that could eventually cause creation of flash-gas.

The supply and return of the space heating circuit may each comprise a manifold. A circulation pump may be installed in connection with the manifolds. Additionally, an integrated one-way valve may be mounted in the manifold.

### Brief Description of Drawings

The invention will be described in more detail below by means of nonlimiting examples of embodiments and with reference to the schematic drawings, in which
Fig. 1 shows a general schematic view of a secondary side of a heat pump system according to the invention;
Fig. 2 is a general schematic view of a primary side of a heat pump system according to the invention;
Fig. 3 is a general schematic view of another embodiment of a primary side of a heat pump system.

### Detailed Description

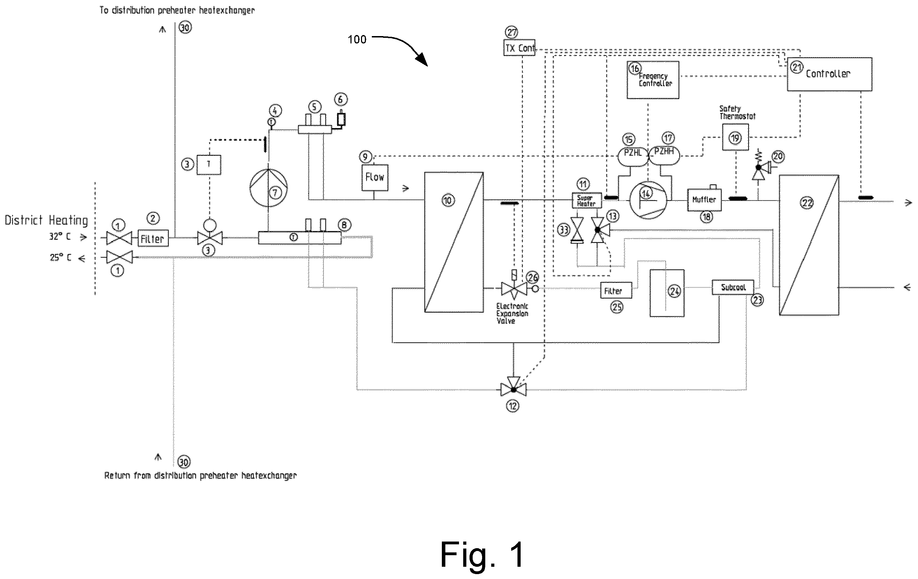

Referring initially to Fig. 1, embodiments of a heat pump system 100 will be described in further detail.

The heat pump system 100 can for instance be designed to be part of a larger heat pump system comprising multiple heat pumps.

In Fig. 1, the dashed lines indicate the components of the system that are actively controlled by a controller.

Fig. 1 illustrates a secondary side of a heat pump system 100 including the supply and return from a district heating network.
The heat pump system 100 comprises a first heat exchanger 10, a second heat exchanger 22, a compressor 14, a superheating heat exchanger 11 and a sub-cooling heat exchanger 23.

The first heat exchanger 10 is mounted in series with a superheater or super-heating heat exchanger 11. The high efficiency of the heat pump 100 is achieved by the superheater 11. The superheater 11 can overheat the hot suction gas up to 50°C.

The refrigerant gas that is to be sent to the compressor is in a superheated state to secure that wet compression and compressor surge can be prevented. Therefore, an abnormal increase in the internal pressure of the compressor can be suppressed and damage to the compressor can be avoided.

The first heat exchanger 10 is connected to the DH network.

A subcooler or sub-cooling heat exchanger 23 is mounted in series with the superheater 11. The subcooler 23 can cool down the liquid refrigerant to temperatures below 30° C. As the subcooler 23 cools down the liquid, it adds heat to the 25°C cold water in this embodiment where supply temperature is 32°C and return temperature is 25°C, coming from the DH heat exchanger.

Mounted between the superheater 11 and the subcooler 23 are a one-way valve 33 and a 3-way valve 13 in this embodiment. The 3-way valve 13 allows the refrigerant to bypass the superheating heat-exchanger 11 when the return gas temperature to the compressor 14 becomes too high. In this embodiment, the one-way valve 33 allows only refrigerant to flow through. A by-pass valve 12 is installed between the subcooler 23 and the first heat exchanger 10 to prevent too low refrigerant temperatures.

A muffler 18 is disposed between the compressor 14 and the second heat exchanger 22 to reduce the pulsation of the flow of the refrigerant. The muffler 18 is integrated in the piping line after the compressor (not shown).

A safety valve 20 is also mounted between the muffler 18 and the second heat exchanger 22.

The compressor 14 allows a refrigerant to flow in the piping network and perform a vapour compression refrigeration cycle. This forms a refrigerant circuit. The compressor 14 is mounted at its inlet with a low pressure switch 15 and at its outlet with a high pressure switch 17 which are then mounted with a flow switch 9 and a safety thermostat 19 to protect the system from overly high pressures and temperatures. The safety circuit comprises the high pressure switch 17, low pressure switch 15, flow switch 9, thermostat 19 and the thermal relay of the frequency controller.

Mounted to the subcooler 23 is also a receiver for receiving the refrigerant 24 along with a filter dryer 25 that is mounted in series with the electronic expansion valve 26.

The heat pump system 100 further comprises a frequency controller 16, which is connected to the compressor 14 and to a controller 21.

The controller 21 is further connected to another controller 27 that controls an electronic expansion valve which is installed at the outlet of the first heat exchanger 10. The controller makes use of a pressure transmitter and a temperatures sensor that are mounted on the outlet pipe of the first heat exchanger 10.

A circulation pump 7 may also be comprised for circulating supply water coming from the DH network.

The operation of the heat pump unit will be described in the following.

The low pressure gas refrigerant is sucked into the compressor 14. Then, the high pressure gas refrigerant is sent to the second heat exchanger 22 where it is condensed to become high pressure liquid refrigerant. Afterwards, it flows into the superheater 11 and afterwards into the subcooler 23 and is cooled, reaching a supercooled state. Then, it goes through the filter 25 and the electrically powered expansion valve 26, becoming low pressure refrigerant in a gas-liquid two-phase state, that is sent to the first heat exchanger 10, performing heat exchange, evaporates and becomes low pressure gas refrigerant. Then, it enters into the superheater 11 performs heat exchange with the liquid refrigerant that has been condensed, is heated up and reaches a superheated state.

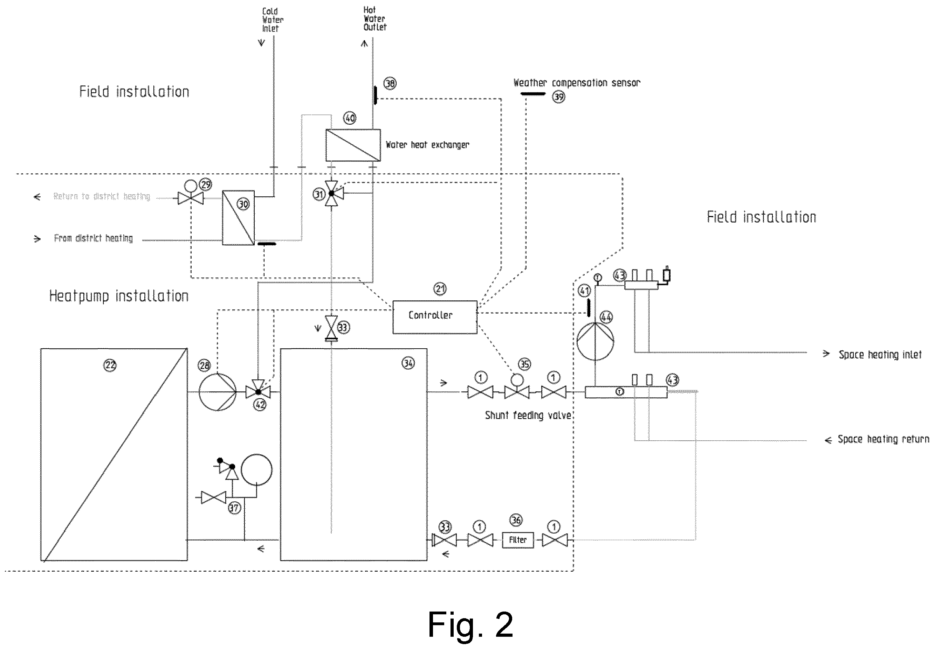

In Fig. 2, the primary side of the heat pump system 100 is shown. The heat pump system 100 further comprises a buffer tank 34, wherein the highest temperature requirements from the heating demand of the building or hot water use determine the temperature in the buffer tank 34. In this embodiment, the tank 34 comprises water. The heating of the building is provided by a shunt circuit or circulation line. A hot water sensor 38 is comprised in the system, as well as an outdoor temperature sensor or weather compensation sensor 39, which are both connected to the controller 21. The flow temperature control is performed according to the outdoor temperature.

A supply opening and a return opening is disposed in a wall of the buffer tank 34. In this embodiment, the buffer tank 34 comprises a temperature sensor to detect the temperature of hot water inside the tank.

If the heating demand is higher than the hot water demand, a 3-way mixing or bypass valve 31 is included to adjust the hot water temperature. If the domestic hot water (DHW) demand is high, the shunt circuit for heating may be closed so that all heat from the buffer tank 34 and heat pump is transferred to the hot water. In the embodiment shown in Fig. 2, a one-way valve 33 is also mounted with the buffer tank after the 3-way mixing or bypass valve 31.

On the primary side of the heat pump system 100, the second heat exchanger 22 is connected to the buffer tank 34 with a circulation pump 28 and a three-way valve 42 interposed between the tank 34 and the heat exchanger 22.

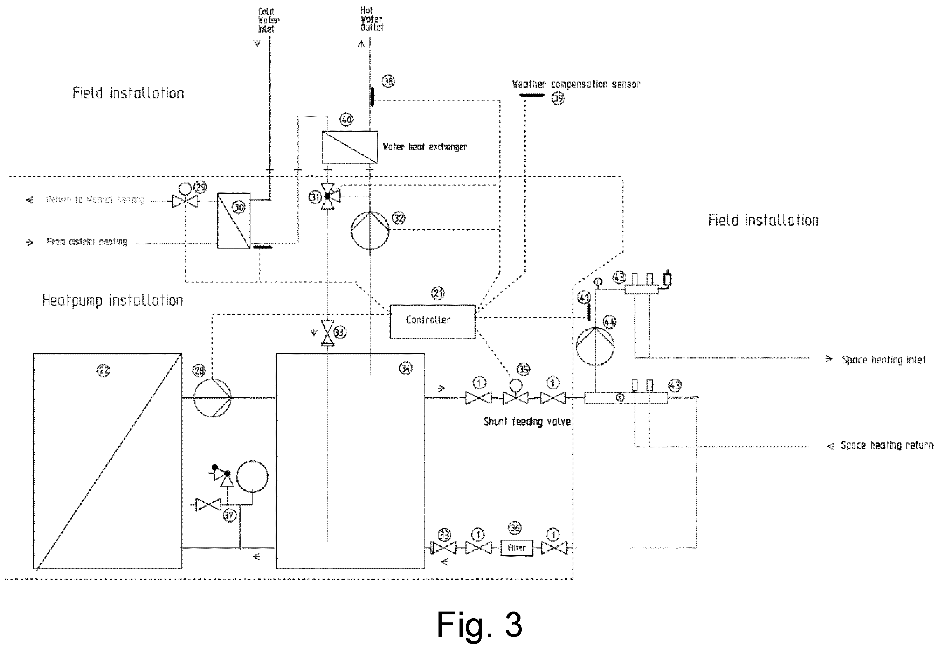

In the embodiment shown in Fig. 3, the primary side comprises another circulation pump 32, which ensures that the heat pump can always supply full capacity to the buffer tank 34. A timer may be coupled with the circulation pump 32 to heat up hot water in advance according to the user's needs.

The main control of the heat pump 100 is coupled with the outdoor temperature sensor 39. The control makes use of a weather compensation program. The controller 21 controls a modulating actuator or modulating valve 35 that sits on the inlet of the shunt circuit for the housing. The controller 21 controls the temperature in the buffer tank 34, depending on whether the house heating or the hot water has the highest set point.

In the embodiments shown in Figs 2 and 3, at the inlet of the buffer tank 34, a water filter 36, a shut-off valve 1 and a one-way valve 33 are included, while at the outlet of the buffer tank 34 a shut-off valve 1 and a modulating shunt valve 35 are installed.

In Fig. 3, a 3-way bypass or mixing valve 31 is installed between the buffer tank 34 and the water outlet from the DHW heat exchanger 40 (field installation) (which is located at the side of the heat exchanger 40 towards the buffer tank 34). The DHW heat exchanger 40 is on the field installation side. If the domestic hot water (DHW) temperature becomes too high (when house heating requirements are high), the hot water may partially bypass the DHW heat exchanger 40 and the desired DHW temperature will be thus achieved.

The circulation line is configured to allow a fluid to flow inside. The controller 21 is configured to set a setpoint and perform a distribution control of the fluid based on the setpoint. Mounted with the controller 21 is a temperature sensor 41

When the shunt feeding valve 35 opens, the outgoing fluid from the buffer tank 34 flows into the circulation line. When the fluid temperature of the circulation line is equal to the setpoint, the return of the fluid to the buffer tank 34 through the inlet is hindered. When the fluid temperature of the circulation line 35 is below the setpoint, the fluid is returned to the buffer tank 34 through the inlet, or vice versa.

On the primary side, a third or preheating heat exchanger 30 may be used to preheat the cold water. In this embodiment, the preheating heat exchanger 30 can preheat the cold water from 10°C to 25°C using energy from district heating.

In the embodiments shown in Figs 2 and 3, each of the supply and return of the space heating circuit comprises a manifold 43. A circulation pump 45 is also installed in connection with the two manifolds 43.

### List of reference numerals

- 1: Shut off valve
- 2: Water filter
- 3: Modulating valve
- 4: Thermometer
- 5: Manifold
- 6: Automatic air discharge valve
- 7: Secondary circulation pump
- 8: Manifold
- 9: Flowswitch
- 10: First heat exchanger
- 11: Superheater
- 12: Bypass valve
- 13: Three-way valve
- 14: Compressor
- 15: Low pressure switch
- 16: Frequency controller
- 17: High pressure switch
- 18: Muffler
- 19: Safety thermostat
- 20: Safety valve
- 21: Controller
- 22: Second heat exchanger
- 23: Subcooler
- 24: Receiver for refrigerant
- 25: Filter dryer
- 26: Electronic expansion valve
- 27: Controller for electronic expansion valve
- 28: Circulation pump
- 29: Modulating valve
- 30: Preheating or third heat exchanger
- 31: Three-way mixing valve
- 32: Circulation pump
- 33: One way valve
- 34: Buffer tank
- 35: Modulating shunt valve
- 36: Waterfilter
- 37: Expansion vessel, safety valve, water filling
- 38: Hot water sensor
- 39: Weather compensation sensor
- 40: DHW heat exchanger
- 41: Temperature Sensor
- 42: Three-way valve
- 43: Manifold
- 44: Circulation pump

- 100: Heat pump system

## Claims

1. A heat pump system for connection with an ultra-low district heating network, the heat pump system comprising:
a piping network,
a compressor configured to allow a refrigerant to flow in the piping network and perform a vapour compression refrigeration cycle,
a first heat exchanger connected to the piping network and to the compressor, the first heat exchanger causing a heat-exchange between the refrigerant flowing in the piping network and water passing therethrough,
a second heat exchanger connected to the piping network and to the compressor, the second heat exchanger causing a heat-exchange between the refrigerant flowing in the piping network and water passing therethrough,
a sub-cooling heat exchanger configured to cool down the refrigerant flowing in the piping network,
a super-heating heat exchanger configured to heat up the refrigerant flowing in the piping network,
a buffer tank having an inlet at the lower part of the buffer tank and an outlet at the upper part of the buffer tank,
a circulation line and a controller, the circulation line configured to allow a fluid to flow therein and the controller being configured to set a setpoint and perform a distribution control of the fluid based on the setpoint,
a third heat exchanger connected to a supply network being configured to preheat the fluid,
wherein when the fluid temperature of the circulation line is equal to the setpoint, the return of the fluid to the buffer tank through the inlet is hindered, and when the fluid temperature of the circulation line is below the setpoint, the fluid is returned to the buffer tank through the inlet, or vice versa.

2. A heat pump system according to claim 1, wherein the heat pump system further comprises a muffler disposed between the the compressor and the second heat exchanger and reduces the pulsation of the flow of the refrigerant.

3. A heat pump system according to claim 1, wherein the heat pump system further comprises a bypass passage to allow the refrigerant bypassing the superheating heat-exchanger.

4. A heat pump system according to claim 1, wherein the fluid is water and the third heat exchanger is a heat exchanger for hot water supply.

5. A heat pump system according to claim 1, wherein the compressor is connected to a low-pressure switch through an inlet side and to a high-pressure switch through an outlet side or vice versa.

6. A heat pump system according to claim 1, wherein the heat pump system further comprises a flow rate adjustment mechanism capable of adjusting the flow rate of the fluid in the circulation line, so that the return of the fluid to the buffer tank through the inlet is hindered by the flow rate adjustment mechanism.

7. A heat pump system according to claim 7, wherein the flow rate adjustment is a heating mixing valve.

8. A heat pump system according to claim 9, wherein the temperature of the refrigerant exiting the subcooler is equal to or below 30°C .

9. A heat pump system according to claim 9, wherein the refrigerant is R1234ZE.

10. A heat pump system according to claim 1, wherein the heat pump system further comprises a frequency controller.

11. A heat pump system according to claim 1, wherein the heat pump system further comprises a circulation pump connected to the circulation line configured to ensure that the heat pump system can supply full capacity to the buffer tank.

12. A heat pump system according to claim 1, wherein the heat pump system further comprises an outdoor temperature sensor connected to the controller, so that the outdoor temperature sensor provides the controller with a temperature measurement.

13. A heat pump system according to claim 1, wherein the heat pump system further comprises a modulating valve that is configured to be controlled by the controller.

14. A heat pump system according to claim 1, wherein the heat pump system further comprises a safety circuit, the circuit comprising one or more of a high pressure switch, a low pressure switch, a flow switch, a thermostat and/or a thermal relay of the compressor.

15. A method of operating a heat pump system for connection with an ultra-low district heating network according to claim 1, wherein the sub-cooling heat exchanger is configured to cool down the refrigerant to or below 30°C.
